# EUROPÄISCHE PATENTANMELDUNG

(11) **EP 4 764 397 A1**
(43) Veröffentlichungstag der Anmeldung: **24.06.2026**
(21) Anmeldenummer: 25220807.9
(22) Anmeldetag: 04.12.2025
(51) Int. Cl.: G01B 7/16, G01B 11/00, G01B 11/26, G01B 15/00, G01L 1/22

(54) **VERFAHREN ZUR DURCHFÜHRUNG EINER DEHNUNGSMESSUNG AN EINEM BAUTEIL**

(30) Priorität: 20.12.2024 DE 102024139149
(71) Anmelder: Volkswagen Aktiengesellschaft, 38440 Wolfsburg (DE)
(72) Erfinder: Hartrumpf, Niklas, 38440 Wolfsburg (DE); Sebastian, Eike, 38440 Wolfsburg (DE)

(57) **Zusammenfassung**

Verfahren zur Durchführung einer Dehnungsmessung an einem Bauteil (10), wobei ein Dehnungsmessstreifen (12) auf der Oberfläche des Bauteils (10) befestigt wird und mittels des Dehnungsmessstreifens (12) die Dehnungsmessung an dem Bauteil (10) durchgeführt wird. Das Bauteil (10) besteht zumindest in dem Bereich des Bauteils (10), in dem der Dehnungsmessstreifen (12) auf der Oberfläche des Bauteils (10) befestigt wird, aus einem anisotropen und/oder inhomogenen Material, wobei die Anisotropie und/oder die Inhomogenität des Materials, zumindest im Wesentlichen, dadurch verursacht wird, dass das Material Bestandteile (14) aufweist, die derart in dem Material angeordnet sind, dass sie ein regelmäßiges Muster aus sich periodisch wiederholenden Strukturen bilden.

Vor der Befestigung des Dehnungsmessstreifens (12) an dem Bauteil (10) wird in einem Bereich, in dem der Dehnungsmessstreifen (12) auf der Oberfläche des Bauteils (10) befestigt werden soll, das Muster mit einer Erfassungseinrichtung erfasst und die exakte Position und/oder Ausrichtung, in der der Dehnungsmessstreifen (12) auf der Oberfläche befestigt wird, in Abhängigkeit des erfassten Musters gewählt.

## Beschreibung

Die Erfindung betrifft ein Verfahren zur Durchführung einer Dehnungsmessung an einem Bauteil nach dem Oberbegriff des Anspruchs 1.

Aus der Praxis ist es bekannt, Dehnungsmessungen an einem Bauteil durchzuführen, indem ein Dehnungsmessstreifen auf der Oberfläche des Bauteils befestigt und mittels des Dehnungsmessstreifens die Dehnungsmessung an dem Bauteil durchgeführt wird. Derartige Verfahren haben den Vorteil, dass sie einfach und kostengünstig durchgeführt werden können und in vielen Fällen gute Ergebnisse liefern.

Problematisch ist es jedoch, wenn das Bauteil in dem Bereich, in dem der Dehnungsmessstreifen auf der Oberfläche des Bauteils befestigt wird, aus einem anisotropen und/oder inhomogenen Material besteht, wie es beispielsweise bei faserverstärkten Werkstoffen oftmals der Fall ist. Zwar können Dehnungsmessungen mit solchen Dehnungsmessstreifen an derartigen Materialien durchaus durchgeführt werden, die CN 103 344 560 A offenbart beispielsweise ein solches Verfahren. Die Messwerte weisen jedoch aufgrund der Inhomogenitäten und Anisotropien des Materials eine starke Streuung auf, die von der exakten Position und Ausrichtung des Dehnungsmessstreifens aus der Oberfläche relativ zu den für die Anisotropie und/oder die Inhomogenität ursächlichen Strukturen.

Aus dem Stand der Technik, beispielsweise der DE 2018 112 446 A1, sind zwar Verfahren bekannt, die auf der Basis der Bildkorrelation eine Dehnungsmessung auch an anisotropen und inhomogenen Materialien ermöglichen, diese sind jedoch apparativ sehr aufwendig umzusetzen.

Der Erfindung liegt daher die Aufgabe zugrunde, ein Verfahren der eingangs genannten Art aufzuzeigen, dass die vorstehend genannten Nachteile nicht oder zumindest lediglich in vermindertem Umfang aufweist.

Die Aufgabe wird gelöst durch ein Verfahren zur Dehnungsmessung mit den Merkmalen des Anspruchs 1. Die Merkmale der abhängigen Ansprüche betreffen vorteilhafte Ausführungsformen.

Das Verfahren zur Durchführung einer Dehnungsmessung an einem Bauteil sieht vor, dass ein Dehnungsmessstreifen auf der Oberfläche des Bauteils befestigt wird und mittels des Dehnungsmessstreifens die Dehnungsmessung an dem Bauteil durchgeführt wird. Bei dem Dehnungsmessstreifen der in Rede stehenden Art kann es sich insbesondere um einen Dehnungsmessstreifen handeln, der mit einer Änderung eines elektrischen Widerstands auf seine Verformung reagiert. Wird ein derartiger Dehnungsmessstreifen auf der Oberfläche durch eine flächige stoffschlüssige Verbindung befestigt, beispielsweise indem der Dehnungsmessstreifen mit der Oberfläche verklebt wird, so verformt sich der Dehnungsmessstreifen, wenn sich die Oberfläche verformt. Die daraus folgende Änderung des elektrischen Widerstands kann mit einer geeigneten Auswerteeinrichtung, die mit dem Dehnungsmessstreifen verbunden wird, gemessen werden. Die Auswerteeinrichtung kann insbesondere eine Brückenschaltung zur Messung des elektrischen Widerstands aufweisen.

Der Dehnungsstreifen kann ein Messgitter aus Widerstandsdraht aufweisen, dass auf einen Träger aufgebracht ist. Bei dem Träger kann es sich beispielsweise um eine Kunststofffolie handeln.

Bei der gemessenen Dehnung kann es sich um eine Dehnung aufgrund einer durch mechanische Kräfte, die auf das Bauteil einwirken, verursachten Verformung des Bauteils handeln. Alternativ und/oder ergänzend kann es sich bei der gemessenen Dehnung um eine Dehnung handeln, die sich in dem Bauteil aufgrund einer Temperaturänderung einstellt.

Das Bauteil besteht, zumindest in dem Bereich des Bauteils, in dem der Dehnungsmessstreifen auf der Oberfläche des Bauteils befestigt wird, aus einem anisotropen und/oder inhomogenen Material. Dabei wird die Anisotropie und/oder die Inhomogenität des Materials, zumindest im Wesentlichen, dadurch verursacht, dass das Material Bestandteile aufweist, die derart in dem Material angeordnet sind, dass sie ein regelmäßiges Muster aus sich periodisch wiederholenden Strukturen bilden.

Bei dem Muster handelt es sich insbesondere um ein regelmäßiges dreidimensionales Muster. D. h. mit anderen Worten, die sich periodisch wiederholenden Strukturen sind dreidimensional und wiederholen sich in allen Raumrichtungen. Alternativ und/oder ergänzend können die Bestandteile derart in dem Material angeordnet sein, dass sie ein regelmäßiges zweidimensionales Muster aus sich periodisch wiederholenden Strukturen bilden. Hierbei kann es sich bei den Strukturen um dreidimensionale Strukturen handeln, die sich jedoch lediglich innerhalb einer Ebene regelmäßig wiederholen. Dies kann beispielsweise der Fall sein, wenn ein faserverstärktes Material lediglich eine Lage Faserbündel aufweist, die ein regelmäßiges zweidimensionales Muster aus sich periodisch wiederholenden dreidimensionalen Strukturen, wie beispielsweise bei sich kreuzenden Faserbündel, bilden.

Die Aufgabe wird insbesondere dadurch gelöst, dass vor der Befestigung des Dehnungsmessstreifens an dem Bauteil in einem Bereich, in dem der Dehnungsmessstreifen auf der Oberfläche des Bauteils befestigt werden soll, dass Muster mit einer Erfassungseinrichtung erfasst wird und die exakte Position und/oder Ausrichtung, in der der Dehnungsmessstreifen auf der Oberfläche befestigt wird, in Abhängigkeit des erfassten Musters gewählt wird.

Es hat sich im Zusammenhang mit der vorliegenden Erfindung gezeigt, dass es möglich ist, die Qualität der Messwerte wesentlich zu verbessern, wenn die exakte Position und/oder Ausrichtung des Dehnungsmessstreifens auf der Oberfläche in Abhängigkeit des erfassten Musters gewählt wird. Dies kann insbesondere bedeuten, dass der Dehnungsmessstreifen in einer bestimmten relativen Position und/oder Ausrichtung relativ zu einer der sich periodisch wiederholenden Strukturen auf der Oberfläche befestigt wird. Es hat sich gezeigt, dass die oftmals schlechte Reproduzierbarkeit von Messwerten an anisotropen und/oder inhomogenen Materialien daher herrührt, dass das lokale Dehnungsverhalten ganz maßgeblich durch die lokale räumliche Anordnung der Bestandteile, die die Anisotropie und/oder die Inhomogenität des Materials verursachen, beeinflusst wird.

Bei einem durch Faserbündel verstärkten Material kann das Ergebnis beispielsweise davon abhängen, ob sich der Dehnungsmessstreifen direkt über einem Faserbündel oder über einer Kreuzung eines Faserbündels befindet. Aufgrund der räumlichen Struktur der Anordnung kann auch der Abstand zwischen Faserbündel und Oberfläche eine Auswirkung auf die Messung haben. Die Matrix, in der Faserbündel bei faserverstärkten Werkstoffen in der Regel eingelegt sind, besteht aus einem Matrixmaterial, das andere mechanische Eigenschaften, insbesondere hinsichtlich seines Spannungs-Dehnungs-Verhaltens, aufweist, als die Faserbündel selbst. Befindet sich der Dehnungsmessstreifen also auf einer vergleichsweise dicken Schicht des Matrixmaterials, so wird das Messergebnis ein anderes sein, als wenn der Dehnungsmessstreifen sich an einer Position befindet, an der sich ein Faserbündel sehr nahe an der Oberfläche befindet.

In der Praxis ist es häufig so, dass ein Dehnungsstreifen an einer bestimmten Position und/oder einer bestimmten Ausrichtung auf einem Bauteil befestigt werden soll. Die Position und/oder die Ausrichtung hängt dabei von den Umständen der geplanten Dehnungsmessung ab, beispielsweise von der Geometrie des Bauteils, der Kräfte, die auf das Bauteil einwirken, der Temperatureinflüsse auf das Bauteil, der Art des Dehnungsmessstreifens und/oder dem Zweck, dem die Messung dient. Im Fall eines isotropen Materials lässt sich daher regelmäßig eine ideale oder zumindest sinnvolle Position und/oder Ausrichtung für die Befestigung des Dehnungsmessstreifens auf der Oberfläche für eine geplante Messung definieren. Diese Position und/oder Ausrichtung wird im Folgenden zur sprachlichen Vereinfachung als Idealposition und/oder Idealausrichtung bezeichnet.

Eine Veränderung der Position und/Ausrichtung des Dehnungsmessstreifens relativ zur Geometrie des Bauteils führt gegenüber der Idealposition und/oder Idealausrichtung oftmals zu einer Veränderung und damit einer Verfälschung der Messwerte. Es hat sich jedoch in der Praxis gezeigt, dass geringfügige Änderungen der Position und/oder der Ausrichtung des Dehnungsmessstreifens in Kauf genommen werden können. Die Verfälschung der Messwerte, die sich aus einer solchen Änderung bei einer hypothetischen Messung an einem isotropen Bauteil ergeben würde, ist oftmals geringer als die durch die Inhomogenität und/oder Anisotropie des Materials verursachte Verfälschung der Messwerte.

Hinzu kommt, dass es Szenarien gibt, in denen sich die Position und/oder Ausrichtung des Dehnungsmessstreifens relativ zur Geometrie des Bauteils mit lediglich vernachlässigbarem oder sogar ganz ohne Einfluss auf die Messwerte verändern lässt. So sind beispielsweise Fälle denkbar, beispielsweise auf der Oberfläche eines idealen Biegebalkens, in denen sich der Dehnungsmessstreifen entlang einer Linie auf der Oberfläche des Bauteils verschieben lässt, ohne dass diese relative Änderung der Position zur Geometrie des Bauteils zu einem Einfluss auf die Messwerte führt (bei einer hypothetischen Messung an einem isotropen und homogenen Material - die relative Änderung zu dem Muster führt in der Praxis bei einer Messung an einem anisotropen und/oder inhomogenen Material - natürlich auch in diesem Fall - zu einer Änderung der Messwerte bei der Änderung der Position und/oder Ausrichtung des Dehnungsmessstreifens).

Daher wird vor der Befestigung des Dehnungsmessstreifens an dem Bauteil in einem Bereich, in dem der Dehnungsmessstreifen auf der Oberfläche des Bauteils befestigt werden soll, dass Muster mit einer Erfassungseinrichtung erfasst. Die exakte Position und/oder Ausrichtung, in der der Dehnungsmessstreifen auf der Oberfläche befestigt wird, wird in Abhängigkeit des erfassten Musters gewählt. Dies bedeutet insbesondere, dass der Dehnungsmessstreifen in einer bestimmten Position und/oder Ausrichtung relativ zu einer der sich periodisch wiederholenden Strukturen auf der Oberfläche befestigt wird. Der Einfluss der lokalen Anisotropie und/oder Inhomogenität im Bereich des Dehnungsmessstreifens auf das Ergebnis der Messung wird dadurch zumindest reproduzierbar, wenn die Position und/oder Ausrichtung relativ zu einer der sich periodisch wiederholenden Strukturen bei unterschiedlichen Messungen einheitlich gewählt wird.

Wird die exakte Position und/oder Ausrichtung des Dehnungsmessstreifens auf der Oberfläche nun in Abhängigkeit des erfassten Musters gewählt, so führt dies zwar regelmäßig dazu, dass die exakte Position und/oder Ausrichtung der Befestigung des Dehnungsmessstreifens an dem Bauteil relativ zur Geometrie des Bauteils sich im Vergleich zur Idealposition und/oder Idealausrichtung verändert, was, wie vorstehend ausgeführt, das Risiko einer Verfälschung der Messwerte mit sich bringt. Dennoch hat die vorliegende Erfindung gezeigt, dass, zumindest in einer Vielzahl möglicher Szenarien, die Vorteile des Verfahrens hinsichtlich der Genauigkeit und insbesondere der Reproduzierbarkeit der Messungen überwiegen.

Auf diese Weise lässt sich eine Dehnungsmessung insbesondere dann optimieren, wenn Messungen unterschiedlicher gleichartiger Bauteile zueinander vergleichbar und/oder reproduzierbar sein sollen. Bei der Verwendung typischer anisotroper und/oder inhomogener Materialien ist es in der Regel so, dass die exakte Positionierung und/oder Ausrichtung der regelmäßigen Muster relativ zur Geometrie des Bauteils von Bauteil zu Bauteil variiert. Entsprechend muss auch die exakte Position und/oder Ausrichtung des Dehnungsmessstreifens von Bauteil zu Bauteil variieren, wenn diese eine reproduzierbare Position und/oder Ausrichtung relativ zu dem Muster bzw. einer der sich periodisch wiederholenden Strukturen sein soll.

Das Muster kann durch die Erfassungseinrichtung mittels elektromagnetischer Strahlung erfasst werden. Bei der Strahlung kann es sich insbesondere um sichtbares Licht und/oder Röntgenstrahlung handeln. Je nachdem, um welches anisotrope und/oder inhomogene Material es sich handelt, können sowohl sichtbares Licht als auch Röntgenstrahlung geeignet sein, um Muster die durch die Anordnung von Bestandteilen des Materials gebildet werden zu erfassen.

Bei der Erfassungseinrichtung kann es sich um eine Kamera und/oder einen Flachbilddetektor für die Röntgenstrahlen handeln. Unter einer Kamera ist insbesondere eine Digitalkamera zur Erfassung von Licht im optischen Spektrum zu verstehen. Bei einer Vielzahl Materialien ist die Anisotropie und/oder die Inhomogenität bereits mit bloßem Auge sichtbar. Insbesondere bei derartigen Materialien kann das Abfilmen und/oder Abfotografieren der Oberfläche mit einer Kamera eine einfache aber effektive Möglichkeit für die Realisierung des Verfahrens darstellen. Insbesondere bei Materialien, bei denen eine Erfassung des Musters durch sichtbares Licht nicht oder nicht in zufriedenstellender Weise möglich ist, kann die Verwendung von Röntgenstrahlen eine sinnvolle Lösung zum Erfassen des Musters darstellen. Flachbilddetektoren für Röntgenstrahlen ermöglichen dabei die direkte Erfassung digitaler Bildinformationen und damit digitaler Informationen über das Muster, die im Zuge der Durchführung des Verfahrens unmittelbar weiterverarbeitet werden können, beispielsweise um eine automatisierte Positionierung des Dehnungsmessstreifens an der exakten Position und/oder in der exakten Ausrichtung in Abhängigkeit des erfassten Musters zu ermöglichen. Gleiches gilt für die digitale Weiterverarbeitung für die Bilddaten digitaler Kameras.

Bei dem Material kann es sich um einen faserverstärkten Kunststoff handeln. Faserverstärkte Kunststoffe bieten, insbesondere als Leichtbaumaterialien, gute Eigenschaften, weisen oftmals jedoch eine ausgeprägte Anisotropie auf. Es hat sich gezeigt, dass bei diesen Materialien, bei denen Fasern, insbesondere Kohlenstofffasern und/oder Glasfasern, in einer Kunststoffmatrix eingebettet sind, grundsätzlich ein sinnvolles Anwendungsgebiet für das in Rede stehende Verfahren darstellen.

Das Verfahren kann vorsehen, dass es sich bei den Bestandteilen des Materials, die derart in dem Material angeordnet sind, dass sie ein regelmäßiges Muster aus sich periodisch wiederholenden Strukturen bilden, um Faserbündel handelt. Bei den Faserbündeln kann es sich insbesondere um Faserbündel von Glasfasern und/oder Kohlenstofffasern handeln. Derartige Faserbündel weisen eine gewisse Größe auf. Werden diese Faserbündel in einem Matrixmaterial eingebettet, kann zudem die Dicke der Schicht aus Matrixmaterial zwischen Dehnungsmessstreifen und Faserbündel in Abhängigkeit von der Position und/oder Ausrichtung des Dehnungsmessstreifens relativ zu dem Muster signifikant variieren. Dies ist insbesondere dann der Fall, wenn die Faserbündel einander überkreuzend angeordnet sind. Der starke Einfluss derartiger Faserbündel auf das lokale Dehnungsverhalten resultiert dabei insbesondere auch daraus, dass die Faserbündel, auch im Vergleich zu den Dehnungsmessstreifen, typischerweise eine gewisse Größe aufweisen. Dadurch können die Abmessungen der sich periodisch wiederholenden Strukturen in der Größenordnung der Dehnungsmessstreifen selbst liegen, weshalb sich die durch die Anisotropie und/oder Inhomogenität verursachten lokalen Unterschiede im Dehnungsverhalten des Materials - und damit auch die Vorteile des Verfahrens - besonders stark in der Messung bemerkbar machen.

Das Verfahren kann vorsehen, dass die exakte Position des Dehnungsmessstreifens gewählt wird, indem zunächst eine für die Dehnungsmessung geeignete Zone auf der Oberfläche des Bauteils definiert wird, in der der Dehnungsmessstreifen auf der Oberfläche befestigt werden soll. Weiter kann das Verfahren vorsehen, dass der Dehnungsmessstreifen innerhalb der Zone in einer bestimmten Position und/oder Ausrichtung relativ zu einer der sich periodisch wiederholenden Strukturen auf der Oberfläche befestigt wird.

Unter einer für die Dehnungsmessung geeigneten Zone ist in diesem Zusammenhang insbesondere eine Zone zu verstehen, innerhalb der die exakte Position des Dehnungsmessstreifens geändert werden kann, ohne dass hierdurch im Fall einer hypothetischen Messung an einem isotropen Material Verfälschungen der Messung zu erwarten wären, die über ein akzeptables Maß hinausgehen. Dabei kann das akzeptable Maß der Messwertverfälschung im Vorfeld definiert werden und beispielsweise aufgrund einer Simulation und/oder einer Berechnung die geeignete Zone des Bauteils definiert werden.

Das Verfahren kann alternativ und/oder ergänzend vorsehen, dass die exakte Ausrichtung des Dehnungsmessstreifens gewählt wird, indem zunächst ein für die Dehnungsmessung geeigneter Ausrichtungsbereich auf der Oberfläche des Bauteils definiert wird, in der der Dehnungsmessstreifen auf der Oberfläche befestigt werden soll. Weiter kann das Verfahren vorsehen, dass der Dehnungsmessstreifen innerhalb des Ausrichtungsbereichs in einer bestimmten Ausrichtung relativ zu einer der sich periodisch wiederholenden Strukturen auf der Oberfläche befestigt wird.

Unter einem für die Dehnungsmessung geeigneten Ausrichtungsbereich ist in diesem Zusammenhang insbesondere ein Ausrichtungsbereich zu verstehen, innerhalb dem die exakte Ausrichtung des Dehnungsmessstreifens geändert werden kann, ohne dass hierdurch im Fall einer hypothetischen Messung an einem isotropen Material Verfälschungen der Messung zu erwarten wären, die über ein akzeptables Maß hinausgehen. Dabei kann das akzeptable Maß der Messwertverfälschung im Vorfeld definiert werden und beispielsweise aufgrund einer Simulation und/oder einer Berechnung die geeignete Zone des Bauteils definiert werden.

Alternativ und/oder ergänzend kann das Verfahren vorsehen, dass die exakte Position und/oder Ausrichtung des Dehnungsmessstreifens gewählt wird, indem zunächst eine für die Dehnungsmessung geeignete Idealposition und/oder Idealausrichtung auf der Oberfläche des Bauteils definiert wird. Dies ist typischerweise diejenige Position und/oder Ausrichtung, in der der Dehnungsmessstreifen auf der Oberfläche im Falle einer hypothetischen Messung an einem isotropen Material befestigt würde. Dies kann insbesondere bedeuten, dass eine optimale oder zumindest sinnvolle Position und/oder Ausrichtung für eine Dehnungsmessung unter der Annahme eines isotropen Materials anhand einer Simulation und/oder einer Berechnung definiert wird.

Weiter kann das Verfahren vorsehen, dass der Dehnungsmessstreifen in einer bestimmten Position und/oder Ausrichtung relativ zu einer der sich periodisch wiederholenden Strukturen auf der Oberfläche befestigt wird, von der erwartet wird, dass die Auswahl dieser Position zu einer möglichst geringen oder zumindest akzeptablen Verfälschung der Messergebnisse aufgrund der Abweichung von der Idealposition und/oder Idealausrichtung führt. Dabei ist unter einer Verfälschung der Messergebnisse aufgrund der Abweichung von der Idealposition und/oder Idealausrichtung diejenige Verfälschung der Messergebnisse zu verstehen, die sich auch bei einer hypothetischen Messung an einem Bauteil an einem isotropen und homogenen Material ergeben würde.

Mit anderen Worten bedeutet dies, dass zunächst ohne Berücksichtigung der Anisotropie und/oder der Inhomogenität des Materials eine ideale oder zumindest geeignete Position und/oder Ausrichtung für die Messung an dem Bauteil definiert wird. Die Definition der Idealposition und/oder der Idealausrichtung kann insbesondere durch eine Simulation und/oder durch eine Berechnung erfolgen. Im nächsten Schritt kann dann die exakte Position festgelegt werden, indem eine Position gesucht wird, die die geforderte relative Position und/oder Ausrichtung zu einer der sich wiederholenden Strukturen aufweist. Dabei wird insbesondere gleichzeitig versucht, die Verfälschung aufgrund der Abweichung von der Idealposition und/oder Idealausrichtung möglichst gering oder in einem zumindest akzeptablen Bereich zu halten.

Das Verfahren kann vorsehen, dass für die Auswahl der exakten Position und/oder Ausrichtung des Dehnungsmessstreifens mittels einer Simulation und/oder Berechnung die Verfälschung der Messergebnisse aufgrund der Abweichung von der Idealposition und/oder Idealausrichtung simuliert und/oder berechnet wird und das Ergebnis dieser Simulation und/oder Berechnung der Auswahl der exakten Position und/oder Ausrichtung des Dehnungsmessstreifens zu Grunde gelegt und/oder bei dieser berücksichtigt wird.

Das Verfahren kann in diesem Zusammenhang insbesondere vorsehen, dass die exakte Position und/oder Ausrichtung des Dehnungsmessstreifens derart gewählt wird, dass sich der Dehnungsmessstreifen in einer bestimmten Position und/oder Ausrichtung relativ zu einem Faserbündel befindet. Insbesondere in dem Fall, in dem Faserbündel die sich periodisch wiederholenden Strukturen bilden, ist es sinnvoll, die exakte Position und/oder Ausrichtung relativ zu einem Faserbündel zu definieren. Dies liegt insbesondere daran, dass die Faserbündel einen maßgeblichen Einfluss auf die lokalen mechanischen Eigenschaften des Materials haben.

Das Verfahren kann in diesem Zusammenhang insbesondere vorsehen, dass das bestimmte Faserbündel aufgrund seiner relativen räumlichen Orientierung zu der Richtung, in der das Material im Bereich des Dehnungsmessstreifens während der Messung seine größte Beanspruchung erfährt, ausgewählt wird. Dabei kann es sich bei dem bestimmten Faserbündel insbesondere um ein Faserbündel handeln, das in einem möglichst spitzen Winkel, insbesondere parallel, zu der Richtung, in der das Material im Bereich des Dehnungsmessstreifens während der Messung seine größte Beanspruchung erfährt. Alternativ kann es sich bei dem bestimmten Faserbündel insbesondere um ein Faserbündel handeln, das in einem möglichst stumpfen Winkel, insbesondere rechtwinklig, zu der Richtung, in der das Material im Bereich des Dehnungsmessstreifens während der Messung seine größte Beanspruchung erfährt.

Das Verfahren kann insbesondere vorsehen, dass zur Befestigung des Dehnungsmessstreifens auf dem Bauteil das Material mittels eines Werkzeugs lokal aufgeschmolzen und der Dehnungsmessstreifen mittels des aufgeschmolzenen Materials befestigt wird. Hierbei kann das Verfahren insbesondere vorsehen, dass ein Bestandteil des Materials mittels des Werkzeugs lokal aufgeschmolzen wird. Bei diesem Bestandteil kann es sich insbesondere um ein Matrixmaterial, beispielsweise einen thermoplastischen Kunststoff, handeln. Bei dem Werkzeug kann es sich insbesondere um einen Stempel handeln. Das Verfahren kann vorsehen, dass der Dehnungsmessstreifen mittels des Werkzeugs an das Material angedrückt wird. Ein derartiges Verfahren hat den Vorteil, dass auf die Klebstoffschicht zwischen dem Dehnungsmessstreifen und der Oberfläche des Materials verzichtet werden kann. Hierdurch können grundsätzlich bessere Ergebnisse bei der Dehnungsmessung erzielt werden, da Einflüsse durch die Klebstoffschicht entfallen. Es ist jedoch so, dass sich lokale Inhomogenitäten und/oder Anisotropien durch den Wegfall der Klebstoffschicht noch stärker auf das Ergebnis der Dehnungsmessung auswirken. Daher ist die vorstehend beschriebene Wahl der Position und/oder Ausrichtung in Abhängigkeit des erfassten Musters in diesem Zusammenhang besonders vorteilhaft.

Weitere praktische Ausführungsformen der Erfindung sind nachfolgend im Zusammenhang mit der Zeichnungen beschrieben. Es zeigt:

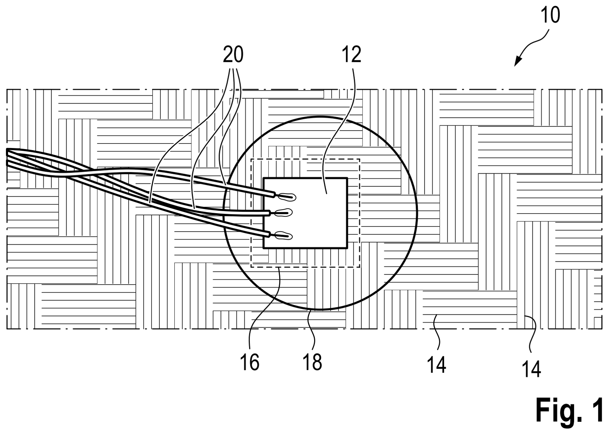

- Fig. 1: eine schematische Darstellung eines auf einem inhomogenen und anisotropen Material befestigten Dehnungsmessstreifens.

Das beispielhafte Verfahren zur Durchführung einer Dehnungsmessung an einem Bauteil 10 sieht vor, dass ein Dehnungsmessstreifen 12 auf der Oberfläche des Bauteils 10 befestigt wird. Ein an einer Oberfläche eines Bauteils 10 befestigter Dehnungsmessstreifen 12 ist in Figur 1 beispielhaft dargestellt. Mittels des Dehnungsmessstreifens 12 wird die Dehnungsmessung an dem Bauteil 10 durchgeführt.

Das Bauteil 10 besteht wie beispielhaft dargestellt, zumindest in dem Bereich des Bauteils 10, in dem der Dehnungsmessstreifen 12 auf der Oberfläche des Bauteils 10 befestigt wird, aus einem anisotropen und/oder inhomogenen Material. Die Anisotropie und/oder die Inhomogenität des Materials wird, zumindest im Wesentlichen, dadurch verursacht, dass das Material Bestandteile 14 aufweist, die derart in dem Material angeordnet sind, dass sie ein regelmäßiges Muster aus sich periodisch wiederholenden Strukturen bilden.

Wie im gezeigten Beispiel kann es sich bei dem Material um einen faserverstärkten Kunststoff handeln. Die Bestandteile 14 des Materials können wie im gezeigten Beispiel Faserbündel 14 sein. Diese können wie im gezeigten Beispiel einander überkreuzend in zwei zueinander senkrechten Richtungen im Material ein regelmäßiges Muster aus sich periodisch wiederholenden Strukturen bilden.

Das beispielhafte Verfahren sieht vor, dass vor der Befestigung des Dehnungsmessstreifens 12 an dem Bauteil 10 in einem Bereich, in dem der Dehnungsmessstreifen 12 auf der Oberfläche des Bauteils 10 befestigt werden soll, das Muster mit einer Erfassungseinrichtung erfasst wird und die exakte Position und/oder Ausrichtung, in der der Dehnungsmessstreifen 12 auf der Oberfläche befestigt wird, in Abhängigkeit des erfassten Musters gewählt wird.

Dabei kann das Muster beispielsweise durch die Erfassungseinrichtung mittels elektromagnetischer Strahlung, insbesondere mit sichtbarem Licht und/oder Röntgenstrahlung, erfasst werden. Die Erfassungseinrichtung kann eine Kamera und/oder einen Flachbilddetektor für Röntgenstrahlen umfassen.

Die exakte Position des Dehnungsmessstreifens 12 kann wie im gezeigten Beispiel gewählt werden, indem zunächst eine für die Dehnungsmessung geeignete Zone 16 auf der Oberfläche des Bauteils definiert wird, in der der Dehnungsmessstreifen 12 auf der Oberfläche befestigt werden soll, und der Dehnungsmessstreifen 12 innerhalb der Zone 16 in einer bestimmten Position relativ zu einer der sich periodisch wiederholenden Strukturen auf der Oberfläche befestigt wird.

Das Verfahren kann wie im gezeigten Beispiel anhand eines Abdrucks 18 angedeutet vorsehen, dass zur Befestigung des Dehnungsmessstreifens auf dem Bauteil 10 das Material des Bauteils 10 mittels eines Werkzeugs lokal aufgeschmolzen und der Dehnungsmessstreifen 12 mittels des aufgeschmolzenen Materials befestigt wird. Anschließend kann der auf die Oberfläche aufgebrachte Dehnungsmessstreifen 12 wie beispielhaft dargestellt 12 durch Kabel 20 mit einer Auswerteeinrichtung verbunden und die Messung durchgeführt werden.

Wie beispielhaft dargestellt kann die exakte Ausrichtung des Dehnungsmessstreifens 12 derart gewählt werden, dass sich der Dehnungsmessstreifen 12 in einer bestimmten Position und/oder Ausrichtung relativ zu einem Faserbündel 14 befindet. So kann der Dehnungsmessstreifen 12 insbesondere wie beispielhaft dargestellt parallel zu einem Faserbündel 14 ausgerichtet sein.

Die in der vorliegenden Beschreibung, in den Zeichnungen, sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden.

### Bezugszeichenliste

- 10: Bauteil
- 12: Dehnungsmessstreifen
- 14: Bestandteil/Faserbündel
- 16: Zone
- 18: Abdruck
- 20: Kabel

## Patentansprüche

1. Verfahren zur Durchführung einer Dehnungsmessung an einem Bauteil (10), wobei ein Dehnungsmessstreifen (12) auf der Oberfläche des Bauteils (10) befestigt wird und mittels des Dehnungsmessstreifens (12) die Dehnungsmessung an dem Bauteil (10) durchgeführt wird, wobei das Bauteil (10) zumindest in dem Bereich des Bauteils (10), in dem der Dehnungsmessstreifen (12) auf der Oberfläche des Bauteils (10) befestigt wird, aus einem anisotropen und/oder inhomogenen Material besteht,
wobei die Anisotropie und/oder die Inhomogenität des Materials, zumindest im Wesentlichen, dadurch verursacht wird, dass das Material Bestandteile (14) aufweist, die derart in dem Material angeordnet sind, dass sie ein regelmäßiges Muster aus sich periodisch wiederholenden Strukturen bilden,
**dadurch gekennzeichnet,**
**dass** vor der Befestigung des Dehnungsmessstreifens (12) an dem Bauteil (10) in einem Bereich, in dem der Dehnungsmessstreifen (12) auf der Oberfläche des Bauteils (10) befestigt werden soll, das Muster mit einer Erfassungseinrichtung erfasst wird und die exakte Position und/oder Ausrichtung, in der der Dehnungsmessstreifen (12) auf der Oberfläche befestigt wird, in Abhängigkeit des erfassten Musters gewählt wird.

2. Verfahren nach Anspruch 1,
**dadurch gekennzeichnet,**
**dass** das Muster durch die Erfassungseinrichtung mittels elektromagnetischer Strahlung, insbesondere mit sichtbarem Licht und/oder Röntgenstrahlung, erfasst wird.

3. Verfahren nach Anspruch 1 oder 2,
**dadurch gekennzeichnet,**
**dass** die Erfassungseinrichtung eine Kamera und/oder einen Flachbilddetektor für Röntgenstrahlen umfasst.

4. Verfahren nach einem der vorigen Ansprüche,
**dadurch gekennzeichnet,**
**dass** es sich bei dem Material um einen faserverstärkten Kunststoff handelt, insbesondere wobei es sich bei den Bestandteilen (14) des Materials, die derart in dem Material angeordnet sind, dass sie ein regelmäßiges Muster aus sich periodisch wiederholenden Strukturen bilden, um Faserbündel (14), insbesondere um Faserbündel (14) von Glasfasern und/oder Kohlenstofffasern, handelt.

5. Verfahren nach einem der vorigen Ansprüche,
**dadurch gekennzeichnet,**
**dass** die exakte Position des Dehnungsmessstreifens (12) gewählt wird, indem zunächst eine für die Dehnungsmessung geeignete Zone (16) auf der Oberfläche des Bauteils (10) definiert wird, in der der Dehnungsmessstreifen (12) auf der Oberfläche befestigt werden soll, und der Dehnungsmessstreifen (12) innerhalb der Zone (16) in einer bestimmten Position relativ zu einer der sich periodisch wiederholenden Strukturen auf der Oberfläche befestigt wird.

6. Verfahren nach einem der vorigen Ansprüche,
**dadurch gekennzeichnet,**
**dass** die exakte Ausrichtung des Dehnungsmessstreifens (12) gewählt wird, indem zunächst ein für die Dehnungsmessung geeigneter Ausrichtungsbereich auf der Oberfläche des Bauteils (10) definiert wird, in der der Dehnungsmessstreifen (12) auf der Oberfläche befestigt werden soll, und der Dehnungsmessstreifen (12) innerhalb des Ausrichtungsbereichs in einer bestimmten Ausrichtung relativ zu einer der sich periodisch wiederholenden Strukturen auf der Oberfläche befestigt wird.

7. Verfahren nach einem der vorigen Ansprüche,
**dadurch gekennzeichnet,**
**dass** die exakte Position und/oder Ausrichtung des Dehnungsmessstreifens (12) gewählt wird, indem zunächst eine für die Dehnungsmessung geeignete Idealposition und/oder Idealausrichtung auf der Oberfläche des Bauteils (10) definiert wird, in der der Dehnungsmessstreifen (12) auf der Oberfläche im Falle einer hypothetischen Messung an einem isotropen und homogenen Material befestigt würde, und der Dehnungsmessstreifen (12) in einer bestimmten Position und/oder Ausrichtung relativ zu einer der sich periodisch wiederholenden Strukturen auf der Oberfläche befestigt wird, von der erwartet wird, dass die Auswahl dieser Position zu einer möglichst geringen oder zumindest akzeptablen Verfälschung der Messergebnisse aufgrund der Abweichung von der Idealposition und/oder Idealausrichtung führt.

8. Verfahren nach Anspruch,
**dadurch gekennzeichnet,**
**dass** die exakte Position und/oder Ausrichtung des Dehnungsmessstreifens (12) derart gewählt wird, dass sich der Dehnungsmessstreifen (12) in einer bestimmten Position und/oder Ausrichtung relativ zu einem Faserbündel (14) befindet.

9. Verfahren nach Anspruch,
**dadurch gekennzeichnet,**
**dass** das bestimmte Faserbündel (14) aufgrund seiner relativen räumlichen Orientierungen zu der Richtung, in der das Material im Bereich des Dehnungsmessstreifens (12) während der Messung seine größte Beanspruchung erfährt, ausgewählt wird.

10. Verfahren nach einem der vorigen Ansprüche,
**dadurch gekennzeichnet,**
**dass** zur Befestigung des Dehnungsmessstreifens (12) auf dem Bauteil das Material, insbesondere ein Bestandteil (14) des Materials, mittels eines Werkzeugs lokal aufgeschmolzen und der Dehnungsmessstreifen (12) mittels des aufgeschmolzenen Materials befestigt wird.
